# FASCICULE DE BREVET EUROPEEN

(11) **EP 4 180 239 B1**
(45) Date de publication et mention de la délivrance du brevet: **30.07.2025**
(21) Numéro de dépôt: 22206198.8
(22) Date de dépôt: 08.11.2022
(51) Int. Cl.: B60B 11/02, B60B 11/06

(54) **DISPOSITIF DE ROULEMENT POUR UN VÉHICULE TERRESTRE**
ROLLVORRICHTUNG FÜR EIN LANDFAHRZEUG
ROLLING DEVICE FOR A LAND VEHICLE

(30) Priorité: 10.11.2021 FR 2111969
(43) Date de publication de la demande: 17.05.2023
(73) Titulaire: Ensta Bretagne, 29806 Brest Cedex 9 (FR)
(72) Inventeur: ARGOUARC'H, Yannick, 29806 Brest Cedex 9 (FR); TREBAOL, Hervé, 29806 Brest Cedex 9 (FR)
(74) Mandataire: Cabinet Le Guen Maillet

(56) Documents cités:
- BE-A- 396 649
- US-A- 1 887 544

## Description

### DOMAINE TECHNIQUE

L'invention concerne un dispositif de roulement, ainsi qu'un véhicule comportant au moins un tel dispositif de roulement. Le domaine de l'invention concerne un dispositif de roulement destiné à rouler sur un support de roulage comme le sol par exemple.

L'invention se situe dans le domaine du transport terrestre et s'applique à tous types de transporteurs terrestres comme les transporteurs de charges lourdes (travaux publics, industrie minière, agriculture, industrie forestière), les transporteurs tout terrain, etc.

### ÉTAT DE LA TECHNIQUE ANTÉRIEURE

Il est connu d'utiliser un dispositif de roulement qui se déforme et s'adapte à la géométrie du support de roulage sur lequel il roule, afin de maximiser la surface de contact.

Le document US1887544 décrit un dispositif de roulement pour un véhicule terrestre, où le dispositif de roulement comporte un essieu, deux jantes montées sur l'essieu et chaque jante porte un pneu. L'essieu porte un flasque sur lequel est montée une pluralité de rotules rotatives et chaque rotule supporte une tige qui traverse ladite rotule rotative. Chaque extrémité de chaque tige est solidaire d'une rotule. Les jantes sont disposées de part et d'autre du flasque et chaque jante est montée articulée sur les rotules fixées aux extrémités des tiges.

Lorsque le véhicule roule à grande vitesse, les mouvements des jantes peuvent être entravés par des effets d'inertie qui peuvent être nuisibles au bon fonctionnement du dispositif de roulement, comme par exemple des balourds ou des vibrations.

Pour éviter ces phénomènes, le document US1887544 prévoit un système de blocage qui empêche l'articulation au niveau des rotules rotatives, bloquant ainsi le mouvement entre les deux jantes.

Une difficulté engendrée par le dispositif de roulement du document US1887544, est que des pierres ou des objets peuvent se coincer entre les jantes. Afin de surmonter cette difficulté, il est alors possible de réduire le jeu entre les pneus, mais dans ce cas, cela limite les capacités à s'adapter à un support de roulage courbe.

Une autre difficulté est engendrée lorsque le dispositif de roulement est bloqué et que le dispositif de roulement rencontre un obstacle nécessitant son articulation.

Une autre difficulté est que les jantes ne reprennent pas automatiquement une position coaxiale entre-elles après le passage sur une surface de roulage courbe. Les jantes peuvent alors être décalées dans la direction de déplacement du véhicule.

Le document BE-A-396 649 divulgue un dispositif de roulement de l'état de la technique comportant :
- un support radial apte à tourner autour d'une direction de rotation,
- au moins deux roues disposées autour de la direction de rotation et disposées de part et d'autre du support radial, où chaque roue est mobile entre une position centrée dans laquelle l'axe de la roue est coaxial avec la direction de rotation et une position décentrée dans laquelle l'axe de la roue est excentré et parallèle à la direction de rotation,
- au moins deux tiges s'étendant suivant une direction longitudinale, où chaque tige traverse un premier logement du support radial où elle est inclinable par rapport au support radial, où pour chaque tige, chaque roue présente un deuxième logement où ladite tige est inclinable par rapport à la roue, et
- pour au moins une roue, au moins un système de contrôle prévu pour prendre une position de repos lorsque la roue est en position centrée et une position d'activation lorsque la roue est en position décentrée, où en position d'activation, le au moins un système de contrôle tend à ramener la roue à sa position centrée.

Un objet de la présente invention est de proposer un dispositif de roulement pour un véhicule terrestre où le dispositif de roulement est adaptable en fonction du support de roulage tout en assurant un écart minimal entre les roues, et où le dispositif de roulement comporte un système de contrôle qui permet de résoudre les éventuels problèmes de vibrations et de non coaxialité de l'état de la technique.

À cet effet, est proposé un dispositif de roulement comportant :
- un support radial apte à tourner autour d'une direction de rotation,
- au moins deux roues disposées autour de la direction de rotation et disposées de part et d'autre du support radial, où chaque roue est mobile entre une position centrée dans laquelle l'axe de la roue est coaxial avec la direction de rotation et une position décentrée dans laquelle l'axe de la roue est excentré et parallèle à la direction de rotation,
- au moins deux tiges s'étendant suivant une direction longitudinale, où chaque tige traverse un premier logement du support radial où elle est inclinable par rapport au support radial, où pour chaque tige, chaque roue présente un deuxième logement où ladite tige est inclinable par rapport à la roue, et à travers lequel ladite tige est apte à coulisser en translation suivant la direction longitudinale,
- pour chaque roue, des moyens de guidage prévus pour guider ladite roue dans un plan perpendiculaire à la direction de rotation, et
- pour au moins une roue, au moins un système de contrôle prévu pour prendre une position de repos lorsque la roue est en position centrée et une position d'activation lorsque la roue est en position décentrée, où en position d'activation, le au moins un système de contrôle tend à ramener la roue à sa position centrée.

Un tel système de contrôle équipant le dispositif de roulement permet, entre autres, de limiter les vibrations dues aux déplacements rapides des roues et un retour en position coaxiale après un décalage.

Avantageusement, les moyens de guidage comportent au moins trois sabots solidaires de la roue et deux flasques latéraux solidaires du support radial et disposés de part et d'autre de la roue et au moins trois entretoises fixées entre les deux flasques latéraux et chaque sabot est susceptible de venir en appui alternativement par une de ses extrémités contre l'un des flasques latéraux ou par l'autre de ses extrémités contre l'autre des flasques latéraux.

Avantageusement, chaque système de contrôle comporte une cage fixée à la roue et délimitant un volume intérieur entre les deux flasques latéraux, un palet logé dans ledit volume intérieur et réalisé dans un matériau souple et pour chaque palet, une entretoise traverse ledit palet au niveau d'un alésage central que celui-ci présente à cet effet.

Avantageusement, chaque sabot constitue une cage.

Avantageusement, un espace est prévu entre le palet et chaque flasque latéral.

Avantageusement, le palet est fixé par sa surface périphérique extérieure à la cage et fixé par son alésage central à l'entretoise.

Avantageusement, le palet comporte des perçages supplémentaires par rapport à l'alésage central et/ou des bossages.

Avantageusement, chaque premier logement est fixé dans un trou du support radial au niveau d'une zone médiane dudit trou, et le trou présente un axe parallèle à la direction de rotation et présente de part et d'autre de la zone médiane une forme en tronc de cône dont la petite base est orientée vers la zone médiane et dont la grande base est orientée à l'opposé.

Avantageusement, le dispositif de roulement comporte un moyeu apte à tourner autour de la direction de rotation, le support radial est solidaire du moyeu et disposé autour du moyeu.

L'invention propose également un véhicule terrestre comportant un châssis et une pluralité de dispositifs de roulement selon l'une des variantes précédentes où chaque dispositif de roulement est monté mobile en rotation sur le châssis autour de la direction de rotation.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue en perspective d'un dispositif de roulement selon l'invention,
Fig. 2 est une vue identique à celle de la Fig. 1 pour laquelle un flasque latéral a été retiré,
Fig. 3 est une vue en coupe du dispositif de roulement de la Fig. 1 par le plan III contenant l'axe de rotation X, et
Fig. 4 est une vue similaire à celle de la Fig. 3 pour une variante de réalisation de l'invention.

### EXPOSÉ DÉTAILLÉ DE MODES DE RÉALISATION

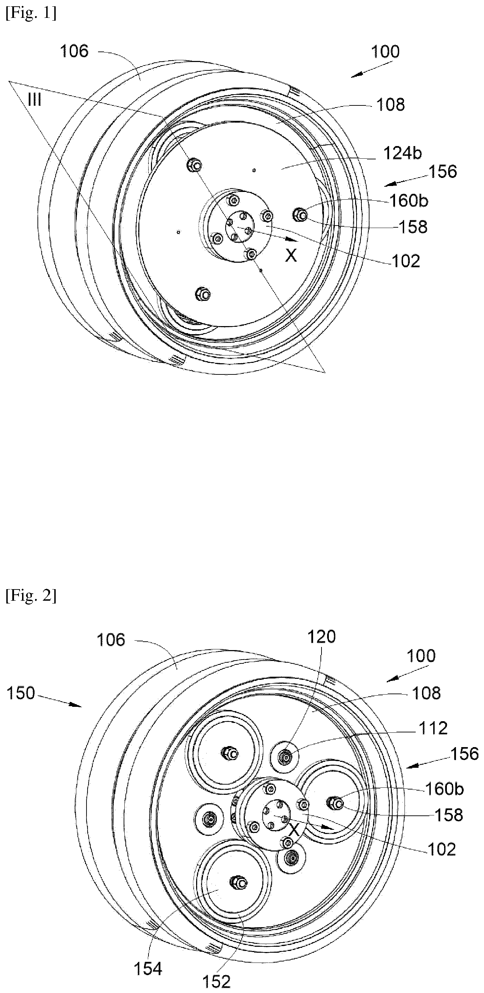

La Fig. 1 et la Fig. 2 montrent un dispositif de roulement 100 de type roue terrestre qui peut équiper un véhicule terrestre. Le véhicule terrestre comporte un châssis et une pluralité de dispositifs de roulement 100. Chaque dispositif de roulement 100 est monté mobile en rotation sur le châssis autour d'une direction de rotation X. La fixation du dispositif de roulement 100 est assurée ici par une prise 102. Par exemple, chaque dispositif de roulement 100 est fixé à une extrémité d'un essieu du véhicule par l'intermédiaire de la prise 102.

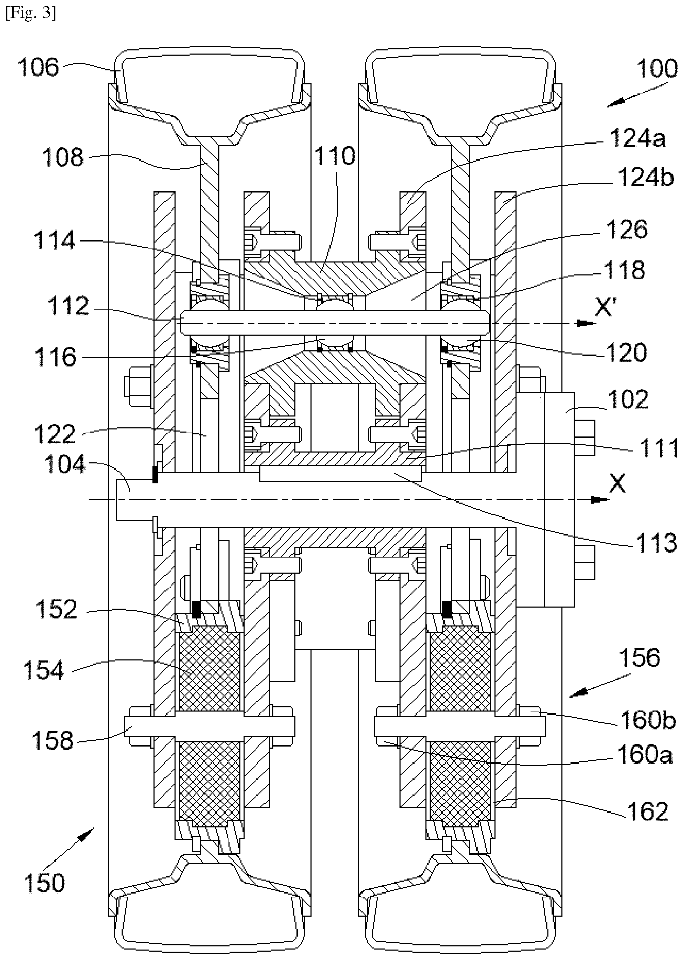

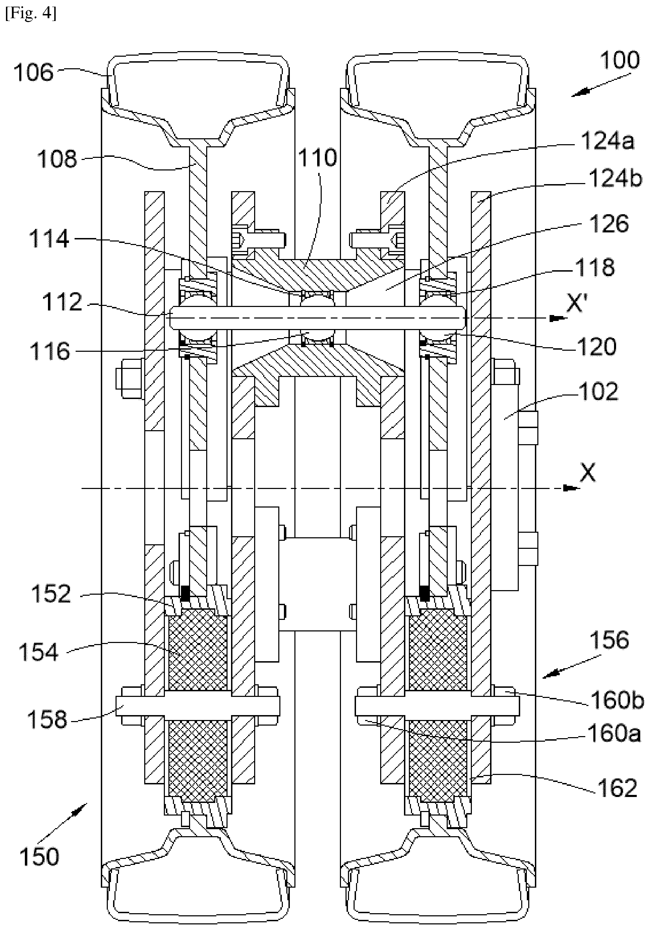

La Fig. 3 montre une coupe d'un premier mode de réalisation du dispositif de roulement 100 avec un moyeu 104 et la Fig. 4 montre une coupe d'un deuxième mode de réalisation du dispositif de roulement 100 sans moyeu 104 ce qui permet d'alléger le dispositif de roulement 100 et de libérer un espace au centre dudit dispositif de roulement 100.

Le dispositif de roulement 100 comporte un support radial 110 qui est constitué ici de trois douilles solidaires. Le support radial 110 est apte à tourner autour de la direction de rotation X qui est ici horizontale.

Dans le mode de réalisation de l'invention présenté à la Fig. 3, le dispositif de roulement 100 comporte un moyeu 104 apte à tourner autour de la direction de rotation X où le support radial 110 est solidaire du moyeu 104 et disposé autour du moyeu 104. Dans un mode de réalisation particulier, le moyeu 104 est solidaire de l'essieu par la prise 102 qui est solidaire du moyeu 104.

Ici, le support radial 110 est solidaire d'une douille centrale 111 qui est elle-même rendue solidaire du moyeu 104 par l'intermédiaire d'une clavette 113 et, ainsi, toute rotation du moyeu 104 autour de la direction de rotation X entraîne la rotation du support radial 110 de la même manière.

Dans le mode de réalisation de l'invention présenté aux Figs. 3 et 4, le support radial 110 est constitué de trois douilles réparties à 120° autour de la direction de rotation X.

Le dispositif de roulement 100 comporte au moins deux roues 108 disposées autour de la direction de rotation X et autour du moyeu 104 dans le premier mode de réalisation de l'invention. Les roues 108 sont disposées de part et d'autre du support radial 110.

Dans le mode de réalisation présenté sur les Figs. 1 à 4, chaque roue 108 est constituée d'une jante et d'un pneu 106 qui est monté autour de la jante et qui est prévu pour rouler sur une surface extérieure comme par exemple le sol. Mais selon un autre mode de réalisation non représenté, la roue 108 peut ne pas présenter de pneu et la roue 108 est alors constituée uniquement d'une jante par exemple dans le cas d'un déplacement sur de la glace.

Dans le mode de réalisation de l'invention présenté aux Figs. 3 et 4, il y a deux roues 108, mais il est possible d'en avoir plus de deux.

Les roues 108 sont disposées les unes à côté des autres le long de la direction de rotation X et réparties de part et d'autre du support radial 110.

Pour chaque roue 108, le dispositif de roulement 100 comporte deux flasques latéraux 124a-b solidaires du support radial 110 et tournant avec lui et disposés de part et d'autre de la roue 108.

Dans chaque mode de réalisation de l'invention, l'un des flasques latéraux 124a est fixé au support radial 110 et l'autre des flasques latéraux 124b est fixé au premier flasque latéral 124a par l'intermédiaire de moyens de fixation 156 décrits ci-dessous.

Dans le premier mode de réalisation de l'invention, le flasque latéral 124a est en outre fixé au moyeu 104 par l'intermédiaire de la douille centrale 111.

Le dispositif de roulement 100 comporte au moins deux tiges 112 qui sont ici au nombre de trois comme cela est visible sur la Fig. 2. Chaque tige 112 s'étend parallèlement à une direction longitudinale X' qui dans le mode de réalisation de l'invention représenté sur la Fig. 3 est parallèle à la direction de rotation X, mais qui, en fonctionnement, peut s'incliner par rapport à la direction de rotation X. Selon le cas général, il y a au moins deux tiges 112 réparties de préférence de manière équi-angulaire autour de la direction de rotation X, par exemple ici à 120°.

Pour chaque tige 112, le support radial 110 comporte un premier logement 114 qui est traversé par la tige 112 et dans lequel ladite tige 112 est inclinable par rapport au support radial 110.

Dans le mode de réalisation de l'invention présenté à la Fig. 3 et à la Fig. 4, dans chaque premier logement 114, est montée une première rotule 116 qui présente un premier alésage la traversant et la tige 112 est montée fixée dans ledit premier alésage. Chaque première rotule 116 est ainsi retenue dans le premier logement 114 et libre en articulation et en rotation autour de la direction longitudinale X' dans ledit premier logement 114. Chaque tige 112 est ainsi montée articulée et fixe en translation dans le premier logement 114.

Chaque tige 112 dépasse de part et d'autre du support radial 110 et présente une première extrémité qui dépasse d'un côté du support radial 110 et une deuxième extrémité qui dépasse de l'autre côté du support radial 110.

Pour chaque tige 112, chaque roue 108 comporte un deuxième logement 118 à travers lequel ladite tige 112 passe et dans lequel ladite tige 112 est inclinable par rapport à la roue 108, et où ladite tige 112 est apte à coulisser en translation suivant la direction longitudinale X' lorsque ladite tige 112 est inclinée. Chaque tige 112 est ainsi montée articulée et libre en translation dans le deuxième logement 118.

Dans le mode de réalisation de l'invention présenté aux Figs. 3 et 4, dans chaque deuxième logement 118, est montée une deuxième rotule 120 qui présente un deuxième alésage la traversant et l'extrémité de la tige 112 est montée dans ledit deuxième alésage de manière à pouvoir coulisser parallèlement à la direction longitudinale X'. Chaque deuxième rotule 120 est ainsi retenue dans le deuxième logement 118 et libre en articulation et en rotation autour de la direction longitudinale X' dans ledit deuxième logement 120.

Une roue 108 reçoit ainsi la première extrémité de chaque tige 112 et l'autre roue 108 reçoit la deuxième extrémité de chaque tige 112.

Ainsi, lorsque l'un des pneus 106 rencontre un obstacle sur le sol ou que le sol présente une pente, les deux pneus 106 se décalent verticalement l'un par rapport à l'autre et chaque tige 112 se désaxe par rapport à la direction de rotation X et la direction longitudinale X' s'incline par rapport à la direction de rotation X.

Du fait de la liberté de translation au niveau des deuxièmes logements 118, chaque tige 112 peut se déplacer par rapport aux roues 108 parallèlement à la direction longitudinale X'.

Pour chaque tige 112, les flasque latéraux 124a qui sont entre les deux flasques 124b disposés aux deux positions extrêmes présentent des fenêtres à travers lesquelles passent la tige 112.

Dans le mode de réalisation de la Fig. 3, chaque roue 108 comporte ici un trou central 122 en son centre pour permettre le passage du moyeu 104 et les dimensions du trou central 122 sont telles que lors du déplacement de la roue 108, elle n'entre pas en contact avec le moyeu 104.

Pour chaque roue 108, le dispositif de roulement 100 comporte des moyens de guidage qui guident ladite roue 108 dans un plan perpendiculaire à la direction de rotation X. Ainsi, même lorsque les pneus 106 se décalent verticalement, ils ne s'écartent pas horizontalement l'un de l'autre.

Chaque roue 108 est guidée par des contacts plans entre ladite roue 108 et les flasques latéraux 124a-b qui sont de part et d'autre de la roue 108.

Selon un mode de réalisation particulier, les moyens de guidage comportent les deux flasques latéraux 124a-b disposés de part et d'autre de la roue 108 et au moins trois entretoises 156 fixées entre les deux flasques latéraux 124a-b afin de garantir la distance entre ces derniers.

Les moyens de guidage comportent également au moins trois sabots 152 fixés à la roue 108 et chacun est susceptible de venir en appui alternativement par une de ses extrémités contre l'un des flasques latéraux 124a ou par l'autre de ses extrémités contre l'autre des flasques latéraux 124b. Les moyens de guidage sont alors constitués des sabots 152 et des flasques latéraux 124a-b. Selon le déplacement de la roue 108 entre les flasques latéraux 124a-b, chaque sabot 152 pourra venir en appui contre l'un ou l'autre des flasques latéraux 124a-b pour guider la roue 108. À l'arrêt, l'écart entre le sabot 152 et le flasque latéral 124a-b est par exemple de l'ordre de 0,1 mm. L'arrangement entre les flasques latéraux 124a-b et les sabots 152 assure un appui plan bilatéral de la roue 108 contre les flasques latéraux 124a-b.

Chaque roue 108 est ainsi mobile entre une position centrée et une position décentrée. Dans la position centrée, l'axe de la roue 108 est coaxial avec la direction de rotation X et dans la position décentrée, l'axe de la roue 108 est excentré et parallèle à la direction de rotation X. Lorsqu'au moins une des roues 108 est dans une position décentrée, les tiges 112 sont inclinées. Il y a plusieurs positions décentrées en fonction du décalage vertical entre les roues 108, c'est-à-dire le décalage perpendiculaire à la direction de rotation X.

Ainsi, lorsque le dispositif de roulement 100 roule sur une surface extérieure qui présente un obstacle ou une pente, les tiges 112, d'une part, s'inclinent et, d'autre part, translatent dans les deuxièmes rotules 120 selon la direction longitudinale X', les roues 108 coulissent verticalement l'une par rapport à l'autre pour s'adapter à la forme de la surface extérieure.

Dans le mode de réalisation de l'invention présenté à la Fig. 3, chaque rotule 116, 120 prend la forme d'une bille traversée par un alésage et où le logement 114, 118 prend la forme d'une bague comportant une surface intérieure de glissement en forme de portion de sphère, dans laquelle la bille est retenue rotative.

Les tiges 112 peuvent être rigides ou souples ce qui autorise un déplacement vertical plus grand des roues 108.

Dans chaque mode de réalisation de l'invention présenté ici, il y a une roue 108 de chaque côté du support radial 110, mais il est possible d'avoir plusieurs roues 108 de chaque côté du support radial 110. Pour chaque tige 112, chaque roue 108 présente alors une deuxième rotule et la tige 112 traverse successivement la deuxième rotule attachée à chaque roue 108. Il y a ainsi plusieurs deuxièmes rotules le long de chaque tige 112. Pour chaque roue 108, le dispositif de roulement 100 comporte alors des moyens de guidage qui assurent entre autres une translation perpendiculairement à la direction de rotation X.

Selon un mode de réalisation particulier dans le cas où il y a plusieurs roues 108 de chaque côté, pour une roue 108, les moyens de guidage comportent deux flasques latéraux disposés de part et d'autre de la roue 108 et fixés au support radial 110 et des sabots 152 fixés à la roue 108 et en appui alternativement par une de leurs extrémités contre l'un des flasques latéraux 124 ou par l'autre de leurs extrémités contre l'autre des flasques latéraux 124.

Selon un mode de réalisation particulier dans le cas où il y a plusieurs roues 108 de chaque côté, les flasques d'une roue 108 sont les roues 108 qui sont de part et d'autre de ladite roue 108.

D'une manière générale, le dispositif de roulement 100 comporte pour au moins une roue 108, au moins un système de contrôle 150. Dans le mode de réalisation de l'invention présenté aux Figs. 2 à 4, il y a trois systèmes de contrôle 150 par roue 108. Les trois systèmes de contrôle 150 sont répartis de manière équi-angulaire autour de la direction de rotation X, ici à 120° et décalés de 60° par rapport aux tiges 112.

Dans un autre mode de réalisation non représenté, il peut y avoir un seul système de contrôle 150 sur une seule roue 108. En effet, comme les roues 108 sont liées par les tiges 112, l'action du système de contrôle 150 sur une roue 108 se transmet à l'autre roue 108.

Lorsque le dispositif de roulement 100 roule, pour chaque roue 108 qui est en position centrée, chaque système de contrôle 150 associé à ladite roue 108 est en position de repos, et pour chaque roue 108 qui est en position décentrée, chaque système de contrôle 150 associé à ladite roue 108 est en position d'activation.

Ainsi, lorsqu'une roue 108 passe alternativement de la position centrée à une position décentrée, chaque système de contrôle 150 associé à ladite roue 108 passe alternativement de la position de repos à la position d'activation.

En position de repos, le système de contrôle 150 n'exerce sur la roue 108 associée aucun effort perpendiculairement à la direction de rotation X.

En position d'activation, le système de contrôle 150 exerce sur la roue 108 associée des efforts perpendiculairement à la direction de rotation X, où ces efforts tendent à ramener la roue 108 à sa position centrée. Chaque système de contrôle 150 introduit ainsi une raideur et un amortissement dans le dispositif de roulement 100 lors du déplacement des roues 108 les unes par rapport aux autres. Un tel système de contrôle 150 permet alors de limiter les vibrations dues aux déplacements rapides des roues et un retour en position coaxiale après un décalage.

Dans les modes de réalisation de l'invention des Figs. 3 et 4, chaque système de contrôle 150 comporte une cage 152 fixée à la roue 108 et délimitant un volume intérieur qui est ici de forme cylindrique d'axe parallèle à la direction de rotation X, et qui est délimité également entre les deux flasques latéraux 124a-b de part et d'autre de la roue 108.

Dans les modes de réalisation de l'invention des Figs. 3 et 4, chaque cage 152 constitue un sabot des moyens de guidage, mais dans un autre mode de réalisation non représenté, la cage et le sabot peuvent constituer des éléments distincts.

Chaque système de contrôle 150 comporte également un palet 154 logé dans le volume intérieur de la cage 152 et réalisé dans un matériau souple qui présente une raideur et un coefficient d'amortissement qui dépend en particulier du poids du véhicule, de sa vitesse, des fréquences vibratoires, etc.

Pour chaque palet 154, une entretoise 156 traverse un palet 154 au niveau d'un alésage central que celui-ci présente à cet effet, mais il peut y avoir plus d'entretoises 156 que de palets 154.

Selon un mode de réalisation particulier, le palet 154 est réalisé dans un élastomère comme par exemple le produit fabriqué par la société Berleburger sous la dénomination « Regufoam^{®} 190 plus ». Dans le mode de réalisation de l'invention présenté ici le palet 154 est cylindrique et percé de l'alésage central.

Le palet 154 est logé entre les flasques latéraux 124a-b, dans la cage 152.

Selon un mode de réalisation particulier, le palet 154 est fixé par sa surface périphérique extérieure à la cage 152, et fixé par son alésage central à l'entretoise 156. La fixation peut être réalisée par exemple par collage et permet d'influer sur les caractéristiques de raideur et d'amortissement du système de contrôle 150.

Selon un autre mode de réalisation particulier, le palet 154 comporte des perçages supplémentaires par rapport à l'alésage central et/ou des bossages pour influer sur les caractéristiques de raideur et d'amortissement du système de contrôle 150.

Dans les modes de réalisation de l'invention présentés au Figs. 3 et 4, chaque entretoise 156 comporte une tige filetée 158 avec un premier épaulement qui est en appui contre une face intérieure d'un des flasques latéraux 124a et un deuxième épaulement qui est en appui contre une face intérieure de l'autre des flasques latéraux 124b. Les faces intérieures sont les faces des flasques latéraux 124a-b qui sont en regard l'une de l'autre et qui sont donc en regard du palet 154. Les deux épaulements permettent de garantir également l'écartement entre les deux flasques latéraux 124a-b.

La tige filetée 158 déborde au-delà de chaque flasque latéral 124a-b et, pour chaque extrémité de la tige filetée 158, l'entretoise 156 comporte un écrou 160a-b qui est vissé sur ladite extrémité et serre chaque flasque latéral 124 contre un des épaulements.

Dans les modes de réalisation de l'invention présenté aux Figs. 3 et 4, c'est la tige filetée 158 qui traverse le palet 154.

Lorsque la roue 108 se déplace verticalement, la cage 152 se déplace de la même manière en comprimant le palet 154 qui est maintenu en position contre la tige filetée 158 et qui tend à revenir à sa configuration initiale du fait de son élasticité.

Pour permettre une libre déformation du palet 154 lors du passage en position d'activation, un espace 162 est prévu entre le palet 154 et chaque flasque latéral 124a-b délimitant le volume intérieur où est logé le palet 154.

Dans le mode de réalisation de l'invention, le support radial 110 ne porte pas de pneu, mais il est également possible de prévoir que le support radial 110 constitue une roue pour un pneu.

Dans le mode de réalisation de l'invention présenté sur les Figs. 3 et 4, chaque premier logement 114 est fixé dans un trou 126 du support radial 110 au niveau d'une zone médiane dudit trou 126. Le trou 126 présente un axe parallèle à la direction de rotation X et présente de part et d'autre de la zone médiane une forme en tronc de cône dont la petite base est orientée vers la zone médiane et dont la grande base est orientée à l'opposé. La forme en tronc de cône permet de limiter le débattement angulaire des tiges 112.

Dans le mode de réalisation de la Fig. 3, les efforts de roulement et le couple provenant de l'essieu se transmettent à différentes pièces et en particulier successivement au moyeu 104, au support radial 110, aux tiges 112 et enfin aux roues 108.

Dans le mode de réalisation de la Fig. 4 où le moyeu 104 n'est pas présent, la prise 102 est fixée directement à un des flasques latéraux 124b disposé à une position extrême. Les efforts de roulement et le couple provenant de l'essieu se transmettent alors à différentes pièces et en particulier successivement à travers le flasque latéral 124b, les entretoises 156, le flasque latéral 124a, le support radial 110, les tiges 112 et enfin les roues 108. L'absence du moyeu 104 permet d'alléger le dispositif de roulement 100 et pour diminuer encore le poids, il est possible de réaliser des évidements dans les flasques latéraux 124a-b et les roues 108

## Revendications

1. Dispositif de roulement (100) comportant :
- un support radial (110) apte à tourner autour d'une direction de rotation (X),
- au moins deux roues (108) disposées autour de la direction de rotation (X) et disposées de part et d'autre du support radial (110), où chaque roue (108) est mobile entre une position centrée dans laquelle l'axe de la roue (108) est coaxial avec la direction de rotation (X) et une position décentrée dans laquelle l'axe de la roue (108) est excentré et parallèle à la direction de rotation (X),
- au moins deux tiges (112) s'étendant suivant une direction longitudinale (X'), où chaque tige (112) traverse un premier logement (114) du support radial (110) où elle est inclinable par rapport au support radial (110), où pour chaque tige (112), chaque roue (108) présente un deuxième logement (118) où ladite tige (112) est inclinable par rapport à la roue (108), et à travers lequel ladite tige (112) est apte à coulisser en translation suivant la direction longitudinale (X'),
- pour chaque roue (108), des moyens de guidage prévus pour guider ladite roue (108) dans un plan perpendiculaire à la direction de rotation (X), et
- pour au moins une roue (108), au moins un système de contrôle (150) prévu pour prendre une position de repos lorsque la roue (108) est en position centrée et une position d'activation lorsque la roue (108) est en position décentrée, où en position d'activation, le au moins un système de contrôle (150) tend à ramener la roue (108) à sa position centrée.

2. Dispositif de roulement (100) selon la revendication 1, **caractérisé en ce que** les moyens de guidage comportent au moins trois sabots (152) solidaires de la roue (108) et deux flasques latéraux (124a-b) solidaires du support radial (110) et disposés de part et d'autre de la roue (108) et au moins trois entretoises (156) fixées entre les deux flasques latéraux (124a-b) et **en ce que** chaque sabot (152) est susceptible de venir en appui alternativement par une de ses extrémités contre l'un des flasques latéraux (124a) ou par l'autre de ses extrémités contre l'autre des flasques latéraux (124b).

3. Dispositif de roulement (100) selon la revendication 2, **caractérisé en ce que** le ou chaque système de contrôle (150) comporte une cage (152) fixée à la roue (108) et délimitant un volume intérieur entre les deux flasques latéraux (124a-b), un palet (154) logé dans ledit volume intérieur et réalisé dans un matériau souple, et **en ce que** pour chaque palet (154), une entretoise (156) traverse ledit palet (154) au niveau d'un alésage central que celui-ci présente à cet effet.

4. Dispositif de roulement (100) selon les revendications 2 et 3, **caractérisé en ce que** chaque sabot (152) constitue une cage (152).

5. Dispositif de roulement (100) selon l'une des revendications 3 ou 4, **caractérisé en ce qu'**un espace (162) est prévu entre le palet (154) et chaque flasque latéral (124a-b).

6. Dispositif de roulement (100) selon l'une des revendications 3 à 5, **caractérisé en ce que** le palet (154) est fixé par sa surface périphérique extérieure à la cage (152) et fixé par son alésage central à l'entretoise (156).

7. Dispositif de roulement (100) selon l'une des revendications 3 à 6, **caractérisé en ce que** le palet (154) comporte des perçages supplémentaires par rapport à l'alésage central et/ou des bossages.

8. Dispositif de roulement (100) selon l'une des revendications 1 à 7, **caractérisé en ce que** chaque premier logement (114) est fixé dans un trou (126) du support radial (110) au niveau d'une zone médiane dudit trou (126), et **en ce que** le trou (126) présente un axe parallèle à la direction de rotation (X) et présente de part et d'autre de la zone médiane une forme en tronc de cône dont la petite base est orientée vers de la zone médiane et dont la grande base est orientée à l'opposé.

9. Dispositif de roulement (100) selon l'une des revendications 1 à 8, **caractérisé en ce qu'**il comporte un moyeu (104) apte à tourner autour de la direction de rotation (X), **en ce que** le support radial (110) est solidaire du moyeu (104) et disposé autour du moyeu (104).

10. Véhicule terrestre comportant un châssis et une pluralité de dispositifs de roulement selon l'une des revendications précédentes où chaque dispositif de roulement est monté mobile en rotation sur le châssis autour de la direction de rotation (X).

## Patentansprüche

1. Rollvorrichtung (100), umfassend:
- einen radialen Träger (110), der in der Lage ist, um eine Drehrichtung (X) herum zu drehen,
- mindestens zwei Räder (108), die um die Drehrichtung (X) herum angeordnet sind und beidseits des radialen Trägers (110) angeordnet sind, wobei jedes Rad (108) zwischen einer zentrierten Position, in der die Achse des Rades (108) koaxial zu der Drehrichtung (X) ist, und einer dezentrierten Position, in der die Achse des Rades (108) außermittig und parallel zu der Drehrichtung (X) ist, beweglich ist,
- mindestens zwei Stangen (112), die sich entlang einer Längsrichtung (X') erstrecken, wobei jede Stange (112) eine erste Aufnahme (114) des radialen Trägers (110) durchdringt, wobei sie in Bezug auf den radialen Träger (110) neigbar ist, wobei für jede Stange (112) jedes Rad (108) eine zweite Aufnahme (118) aufweist, wobei die Stange (112) in Bezug auf das Rad (108) neigbar ist, und durch die hindurch die Stange (112) entlang der Längsrichtung (X') translatorisch gleiten kann,
- für jedes Rad (108) Führungsmittel , die dazu vorgesehen sind, das Rad (108) in einer senkrecht zu der Drehrichtung (X) verlaufenden Ebene zu führen, und
- für mindestens ein Rad (108) mindestens ein Steuerungssystem (150), das dazu vorgesehen ist, eine Ruheposition einzunehmen, wenn das Rad (108) in der zentrierten Position ist, und eine Aktivierungsposition, wenn das Rad (108) in der dezentrierten Position ist, wobei das mindestens eine Steuerungssystem (150) in der Aktivierungsposition bestrebt ist, das Rad (108) in seine zentrierte Position zurückzuführen.

2. Rollvorrichtung (100) nach Anspruch 1, **dadurch gekennzeichnet, dass** die Führungsmittel mindestens drei Schuhe (152) umfassen, die fest mit dem Rad (108) verbunden sind, und zwei seitliche Flansche (124a-b), die fest mit dem radialen Träger (110) verbunden sind und beidseits des Rades (108) angeordnet sind, und mindestens drei Abstandhalter (156), die zwischen den beiden seitlichen Flanschen (124a-b) fixiert sind, und dadurch, dass jeder Schuh (152) geeignet ist, wechselweise mit einem seiner Enden an einem der seitlichen Flasche (124a) oder mit dem anderen seiner Enden an dem anderen der seitlichen Flansche (124b) in Anlage zu gelangen.

3. Rollvorrichtung (100) nach Anspruch 2, **dadurch gekennzeichnet, dass** das oder jedes Steuerungssystem (150) einen Käfig (152) umfasst, der an dem Rad (108) fixiert ist und ein Innenvolumen zwischen den beiden seitlichen Flanschen (124a-b) begrenzt, einen Puck (154), der in dem Innenvolumen aufgenommen ist und aus einem weichen Material ausgeführt ist, und dass bei jedem Puck (154) ein Abstandhalter (156) den Puck (154) an einer zentralen Bohrung durchdringt, den dieser zu diesem Zweck aufweist.

4. Rollvorrichtung (100) nach den Ansprüchen 2 und 3, **dadurch gekennzeichnet, dass** jeder Schuh (152) einen Käfig (152) bildet.

5. Rollvorrichtung (100) nach einem der Ansprüche 3 oder 4, **dadurch gekennzeichnet, dass** ein Raum (162) zwischen dem Puck (154) und jedem seitlichen Flansch (124a-b) vorgesehen ist.

6. Rollvorrichtung (100) nach einem der Ansprüche 3 bis 5, **dadurch gekennzeichnet, dass** der Puck (154) über seine äußere Umfangsfläche an dem Käfig (152) fixiert ist und über seine zentrale Bohrung an dem Abstandhalter (156) fixiert ist.

7. Rollvorrichtung (100) nach einem der Ansprüche 3 bis 6, **dadurch gekennzeichnet, dass** der Puck (154) zusätzliche Lochungen in Bezug auf die zentrale Bohrung und/oder Erhebungen aufweist.

8. Rollvorrichtung (100) nach einem der Ansprüche 1 bis 7, **dadurch gekennzeichnet, dass** jede erste Aufnahme (114) in einem Loch (126) des radialen Trägers (110) an einem mittleren Bereich des Lochs (126) fixiert ist und dass das Loch (126) eine parallel zu der Drehrichtung (X) verlaufende Achse aufweist und beidseits des mittleren Bereichs eine Kegelstumpfform aufweist, deren kleine Grundseite zu dem mittleren Bereich ausgerichtet ist und deren größere Grundseite entgegengesetzt ausgerichtet ist.

9. Rollvorrichtung (100) nach einem der Ansprüche 1 bis 8, **dadurch gekennzeichnet, dass** sie eine Nabe (104) umfasst, die in der Lage ist, um die Drehrichtung (X) herum zu drehen, dass der radiale Träger (110) fest mit der Nabe (104) verbunden ist und um die Nabe (104) herum angeordnet ist.

10. Landfahrzeug, umfassend ein Untergestell und eine Mehrzahl von Rollvorrichtungen nach einem der vorhergehenden Ansprüche, wobei jede Rollvorrichtung um die Drehrichtung (X) herum drehbeweglich an dem Untergestell montiert ist.

## Claims

1. Rolling device (100) comprising:
- a radial support (110) able to turn about a rotation direction (X),
- at least two wheels (108) disposed around the rotation direction (X) and disposed on either side of the radial support (110), wherein each wheel (108) is able to move between a centred position in which the axis of the wheel (108) is coaxial with the rotation direction (X) and a decentred position in which the axis of the wheel (108) is off-centre and parallel to the rotation direction (X),
- at least two rods (112) extending in a longitudinal direction (X'), wherein each rod (112) passes through a first housing (114) of the radial support (110) where it is inclinable with respect to the radial support (110), wherein, for each rod (112), each wheel (108) has a second housing (118) where said rod (112) is inclinable with respect to the wheel (108), and through which said rod (112) is able to slide in translation in the longitudinal direction (X'),
- for each wheel (108), guidance means provided for guiding said wheel (108) in a plane perpendicular to the rotation direction (X), and
- for at least one wheel (108), at least one control system (150) provided for adopting an idle position when the wheel (108) is in a centred position and an activation position when the wheel (108) is in a decentred position, wherein, in the activation position, the at least one control system (150) tends to return the wheel (108) to its centred position.

2. Rolling device (100) according to claim 1, **characterised in that** the guidance means comprise at least three shoes (152) secured to the wheel (108) and two lateral flanges (124a-b) secured to the radial support (110) and disposed on either side of the wheel (108), and at least three struts (156) secured between the two lateral flanges (124a-b), and **in that** each shoe (152) is able to come into abutment alternatively through one of its ends against one of the lateral flanges (124a) or through the other of its ends against the other one of the lateral flanges (124b).

3. Rolling device (100) according to claim 2, **characterised in that** the or each control system (150) comprises a cage (152) secured to the wheel (10) and delimiting an interior volume between the two lateral flanges (124a-b), a blade (154) housed in said interior volume and produced from a flexible material, and **in that**, for each blade (154), a strut (156) passes through said blade (154) at a central bore that the latter has for this purpose.

4. Rolling device (100) according to claims 2 and 3, **characterised in that** each shoe (152) constitutes a cage (152).

5. Rolling device (100) according to one of claims 3 or 4, **characterised in that** a space (162) is provided between the blade (154) and each lateral flange (124a-b).

6. Rolling device (100) according to one of claims 3 to 5, **characterised in that** the blade (154) is secured by its exterior peripheral surface to the cage (152) and secured by its central bore to the strut (156).

7. Rolling device (100) according to one of claims 3 to 6, **characterised in that** the blade (154) comprises additional piercings with respect to the central bore and/or protrusions.

8. Rolling device (100) according to one of claims 1 to 7, **characterised in that** each first housing (104) is secured in a hole (126) of the radial support (110) at a median zone of said hole (126), and **in that** the hole (126) has an axis parallel to the rotation direction (X) and has, on either side of the median zone, the form of a truncated cone the small base of which is oriented towards the median zone and the large base of which is oriented in the opposite direction.

9. Rolling device (100) according to one of claims 1 to 8, **characterised in that** it comprises a hub (104) able to turn about the rotation direction (X), and **in that** the radial support (110) is secured to the hub (104) and disposed around the hub (104).

10. Land vehicle comprising a chassis and a plurality of rolling devices according to one of the preceding claims, wherein each rolling device is mounted so as to be able to rotate on the chassis about the rotation direction (X).
